# EUROPEAN PATENT APPLICATION

(11) **EP 4 089 291 A1**
(43) Date of publication of application: **16.11.2022**
(21) Application number: 22171953.7
(22) Date of filing: 06.05.2022
(51) Int. Cl.: F16B 5/02

(54) **HOLDING MEMBER**

(30) Priority: 12.05.2021 JP 2021081043
(71) Applicant: Nidec Corporation, Kyoto-shi, Kyoto 601-8205 (JP)
(72) Inventor: YOSHINO, Shingo, Kyoto, 601-8205 (JP)
(74) Representative: Kurig, Thomas

(57) **Abstract**

Provided is a holding member (20) that holds a motor (30). The holding member includes a base (21) and multiple attachment parts (23). The base has the motor disposed on an upper surface thereof with a center axis of rotation of the motor arranged in an up-down direction. The attachment part is disposed radially outside the base. The attachment part includes a frame (231), a pair of grippers (232), a first projecting part (233), and a second projecting part (234). The frame surrounds an insertion hole (23a) penetrating in an axial direction and is connected to the base. The pair of grippers is disposed inside the insertion hole and extends radially outward from the base. The first projecting part is disposed between the pair of grippers and projects radially outward from the base. The second projecting part projects from the frame into the insertion hole.

## Description

### Field of the Invention

The disclosure relates to a holding member that holds a motor.

### Description of the Related Art

A conventional supported body (holding member) includes a plate-shaped part having an open hole (through hole). A tubular elastic member is disposed inside the open hole. By inserting and screwing a boss into the elastic member, the supported body is fixed to a support. By disposing the elastic member, vibration occurring between the supported body and the support is able to be absorbed.

According to the above supported body, since the elastic member is provided, there is a possibility that the number of parts may increase and assembly workability may deteriorate.

### SUMMARY OF THE INVENTION

An exemplary holding member of the disclosure is a holding member that holds a motor. The holding member includes a base and multiple attachment parts. The base has the motor disposed on an upper surface thereof with a center axis of rotation of the motor arranged in an up-down direction. The attachment part is disposed radially outside the base. The attachment part includes a frame, a pair of grippers, a first projecting part, and a second projecting part. The frame surrounds an insertion hole penetrating in an axial direction and is connected to the base. The pair of grippers is disposed inside the insertion hole and extends radially outward from the base. The first projecting part is disposed between the pair of grippers and projects radially outward from the base. The second projecting part projects from the frame into the insertion hole.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a side view of a holding member according to an embodiment of the disclosure.
FIG. 2 is a top view of a holding member according to an embodiment of the disclosure.
FIG. 3 is an enlarged perspective view of an attachment part of a holding member according to an embodiment of the disclosure.
FIG. 4 is an enlarged perspective view of an attachment part of a holding member according to an embodiment of the disclosure.
FIG. 5 is an enlarged vertical sectional view of an attachment part of a holding member according to an embodiment of the disclosure.

### DETAILED DESCRIPTION OF THE PREFERRED EMBODIMENTS

Exemplary embodiments of the disclosure are described below in detail with reference to the drawings. In the present specification, a direction parallel to a central axis C of a motor 30, a direction orthogonal to the central axis C of the motor 30, and a direction along an arc centered on the central axis C of the motor 30 are referred to as "axial direction", "radial direction", and "circumferential direction", respectively. Similarly, for a holding member 20, directions that coincide with the axial direction, radial direction, and circumferential direction of the motor 30 in a state in which the motor 30 is disposed are simply referred to as "axial direction", "diameter direction", and "circumferential direction", respectively. In the present specification, a shape or positional relationship of each part is described by taking the axial direction as the up-down direction and the motor 30 side as the upper side with respect to the holding member 20. The term "up-down direction" is merely for description, and does not limit the actual positional relationship and direction.

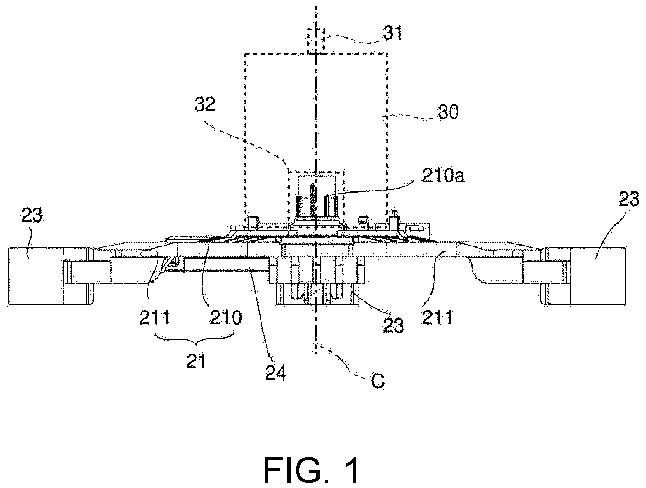

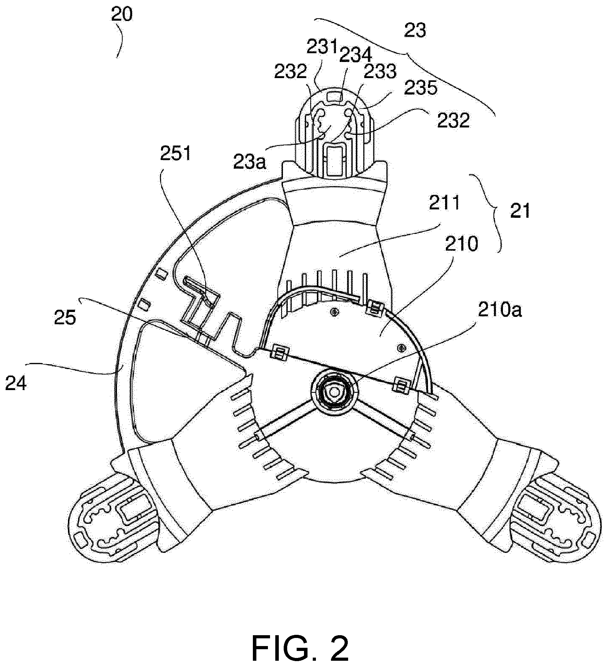

A holding member according to an exemplary embodiment of the disclosure is described. FIG. 1 and FIG. 2 are respectively a side view and a top view of the holding member 20 according to an embodiment. FIG. 1 illustrates a state in which the motor 30 is installed on the holding member 20, and the motor 30 is simply illustrated in broken line.

The holding member 20 includes a base 21, an attachment part 23, a connection part 24, and a lead wire holder 25, and is integrally molded with resin. The holding member 20 holds the motor 30. The motor 30 includes a rotation part 31 that rotates about the central axis C extending in the up-down direction. For example, an impeller (not illustrated) is attached to the rotation part 31.

The base 21 includes a plate 210 and an arm 211. The plate 210 is defined in a plate shape or a substantially plate shape, and has the motor 30 disposed on an upper surface thereof. In the present embodiment, the plate 210 is defined in a circular plate shape or a substantially circular plate shape orthogonal to the central axis C. In the center (on the central axis C) of the plate 210, a cylindrical part 210a extends axially upward. The motor 30 has an installation hole 32 that opens in a center of a lower surface, and the cylindrical part 210a is inserted into the installation hole 32. Accordingly, the motor 30 is installed on the base 21. In the present embodiment, the plate 210 is defined in a circular plate shape or a substantially circular plate shape, but may also be defined in a polygonal plate shape or a substantially polygonal plate shape.

The arm 211 extends radially outward from a radially outer surface of the plate 210, and the attachment part 23 is disposed radially outside the arm 211. The arm 211 is defined in a plate shape or a substantially plate shape and is disposed in plural in the circumferential direction. In the present embodiment, the arm 211 is provided in three places at equal intervals in the circumferential direction. The arm 211 may be provided in two or four or more places at equal intervals in the circumferential direction.

The connection part 24 connects outer peripheral parts of adjacent arms 211 in the circumferential direction and is defined in an arc shape or a substantially arc shape. By providing the connection part 24, the strength of the arm 211 is able to be improved. In the present embodiment, the connection part 24 is provided in only one place. The connection part 24 may be provided in two or more places.

The lead wire holder 25 extends in the radial direction from a circumferential center of the connection part 24 and bridges the connection part 24 and the plate 210. The lead wire holder 25 includes a hook 251 projecting in the circumferential direction. A lead wire (not illustrated) electrically connected to the motor 30 is hooked on the hook 251 and pulled radially outward of the holding member 20. At this time, the lead wire holder 25 is connected to the connection part 24, and the strength of the lead wire holder 25 is able to be improved. Accordingly, deformation of the lead wire holder 25 in the axial direction due to the weight of the lead wire is able to be suppressed.

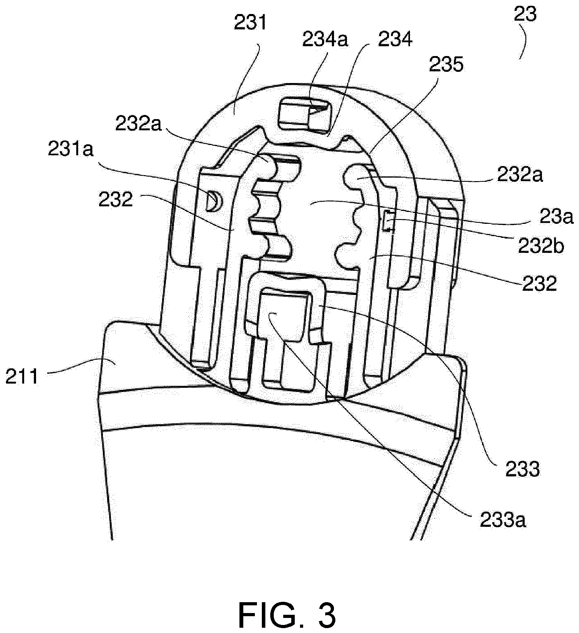

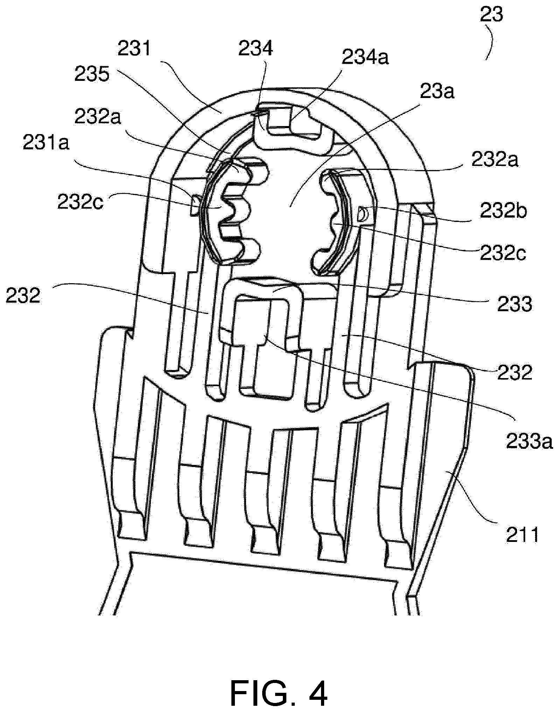

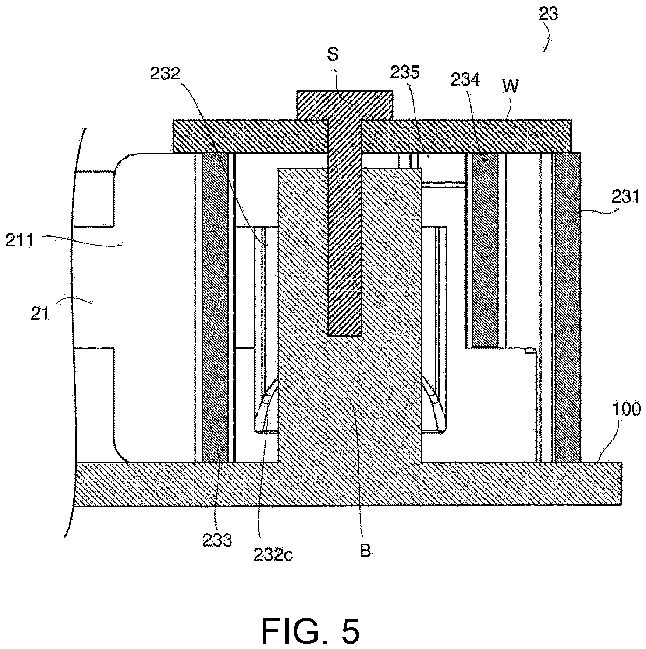

FIG. 3 and FIG. 4 are enlarged perspective views of the attachment part 23. FIG. 3 illustrates the attachment part 23 as viewed from an axially upper side, and FIG. 4 illustrates the attachment part 23 as viewed from an axially lower side. FIG. 5 is an enlarged vertical sectional view of the attachment part 23, illustrating a state in which the attachment part 23 is screwed to the boss B.

The attachment part 23 is disposed radially outside each arm 211 of the base 21, and an insertion hole 23a penetrating in the axial direction opens in the attachment part 23. Multiple attachment parts 23 each include a frame 231, a pair of grippers 232, a first projecting part 233, a second projecting part 234, and a third projecting part 235.

The frame 231 surrounds the insertion hole 23a and is connected to the base 21. In the present embodiment, the frame 231 is defined in an arc shape or a substantially arc shape convex radially outward as viewed in the axial direction, and has both ends connected to radially outer ends of the arm 211. Accordingly, the insertion hole 23a is defined by being surrounded by the radially outer ends of the arm 211 and the frame 231.

The frame 231 includes a frame convex part 231a. The frame convex part 231a projects into the insertion hole 23a.

The pair of grippers 232 is disposed inside the insertion hole 23a and extends radially outward from the base 21. In the present embodiment, the gripper 232 extends radially outward from the radially outer end of the arm 211. The pair of grippers 232 are disposed side by side in the circumferential direction and extend substantially in parallel. A radially outer end of the gripper 232 faces the frame 231 in the radial direction via a gap therebetween. The gripper 232 is integrally molded with the arm 211 with resin, and bends in the circumferential direction.

The gripper 232 includes a protrusion 232a, a gripping convex part 232b, and an inclined part 232c. The protrusion 232a is provided in plural on facing surfaces of the pair of grippers 232 that face each other at the radially outer ends of the grippers 232. In the present embodiment, the protrusion 232a extends in the axial direction, and three protrusions 232a are disposed side by side in the radial direction on each gripper 232. Accordingly, when the boss B having a tubular or substantially tubular shape is gripped by the pair of grippers 232, the protrusion 232a contacts the boss B. Accordingly, the pair of grippers 232 is able to stably grip the bosses B having different diameters while bending in the circumferential direction. Two or four or more protrusions 232a may be disposed side by side in the radial direction on the facing surfaces.

A total of six protrusions 232a defined on the pair of grippers 232 are disposed in a circular or substantially circular shape as viewed in the axial direction. That is, envelopes of the six protrusion 232a are defined in a circular or substantially circular shape as viewed in the axial direction. Accordingly, the pair of grippers 232 is able to stably grip the boss B having a columnar or substantially columnar shape.

The gripping convex part 232b projects in a direction away from the other gripper 232. The gripping convex part 232b and the frame convex part 231a face each other in the circumferential direction. When the pair of grippers 232 grips the boss B having a large outer diameter, the grippers 232 bend in directions away from each other. At this time, the gripping convex part 232b and the frame part 231a contact each other, and the gripper 232 is restricted from being greatly bent. Accordingly, damage to the gripper 232 is able to be prevented. Either the gripping convex part 232b or the frame convex part 231a may be omitted.

The inclined part 232c is disposed at an axially lower end of the gripper 232, and is inclined in a direction approaching the other gripper 232 toward the axially upper side. By defining the inclined part 232c, when the boss B is inserted between the pair of grippers 232, the boss B is guided by the inclined part 232c and smoothly inserted into the insertion hole 23a. Accordingly, attachment workability of the holding member 20 is improved.

The first projecting part 233 is disposed between the pair of grippers 232 and projects radially outward from the base 21. In the present embodiment, the first projecting part 233 projects radially outward from the radially outer end of the arm 211. The first projecting part 233 has a through hole 233a penetrating in the axial direction. By providing the through hole 233a, the occurrence of sink marks in a thick portion during resin molding is able to be reduced.

The second projecting part 234 projects from the frame 231 into the insertion hole 23a. The first projecting part 233 and the second projecting part 234 face each other in the radial direction. The second projecting part 234 has a through hole 234a penetrating in the axial direction. By providing the through hole 234a, the occurrence of sink marks in a thick portion during resin molding is able to be reduced.

The third projecting part 235 is disposed adjacent to the second projecting part 234 in the circumferential direction and projects from the frame 231 into the insertion hole 23a. In the present embodiment, the third projecting part 235 projects radially inward from an axially upper end of the frame 231. An upper surface of the frame 231, an upper surface of the second projecting part 234, and an upper surface of the third projecting part 235 are defined flush with each other.

The upper surface of the third projecting part 235 is at the same axial height as the upper surfaces of the first projecting part 233 and the second projecting part 234 (see FIG. 5). In the case where the upper surface of the first projecting part 233 is at a different axial height from the upper surface of the second projecting part 234, the upper surface of the third projecting part 235 is preferably located at the same axial height as the axially higher one of the upper surface of the first projecting part 233 and the upper surface of the second projecting part 234.

The upper surfaces of the first projecting part 233 and the second projecting part 234 are located on the axially upper side of the upper surface of the gripper 232.

A lower surface of the attachment part 23 is located on the axially lower side of a lower surface of the base 21. In the present embodiment, a lower surface of the frame 231 is at the same axial height as a lower surface of the first projecting part 233 (see FIG. 5). The lower surface of the frame 231 and the lower surface of the first projecting part 233 are located on the axially lower side of a lower surface of the gripper 232, a lower surface of the second projecting part 234, and a lower surface of the third projecting part 235.

Accordingly, while the lower surface of the frame 231 and the lower surface of the first projecting part 233 are in contact with an attachment surface 100 of a device body, a gap is defined between the attachment surface 100 and the lower surface of the base 21. Accordingly, vibration of the motor 30 is able to be prevented from being transmitted from the base 21 to the device body.

At this time, the pair of grippers 232 grips the boss B projecting axially upward from the attachment surface 100. By providing the gripper 232, the boss B is able to be easily positioned inside the insertion hole 23a. Accordingly, assembly workability of the holding member 20 is improved.

The attachment part 23 is screwed to the boss B by a screw S via a washer W. At this time, the washer W contacts the upper surface of the first projecting part 233, the upper surface of the frame 231, the upper surface of the second projecting part 234, and the upper surface of the third projecting part 235. Accordingly, the vibration of the motor 30 in the axial direction is absorbed by the first projecting part 233, the second projecting part 234 and the third projecting part 235. Accordingly, the holding member 20 is able to be provided that is able to absorb the vibration of the motor 30 and is easily attached to an actual machine, while an elastic member such as rubber is omitted and the number of parts is reduced.

At this time, the first projecting part 233 and the second projecting part 234 face each other in the radial direction, and the washer W is stably supported by the first projecting part 233 and the second projecting part 234. Accordingly, the vibration of the motor 30 is able to be further absorbed.

The upper surfaces of the first projecting part 233 and the second projecting part 234 are located on the axially upper side of the upper surface of the gripper 232, and the washer W is not in contact with the upper surface of the gripper 232. Accordingly, the gripper 232 is prevented from being damaged by the vibration of the motor 30. The gripper 232 is able to be molded to be thinned in the axial direction and easily bent in the circumferential direction. Accordingly, the boss B is able to be inserted between the pair of grippers 232 according to the outer diameter of the boss B, and the device body and the holding member 20 are able to be easily positioned. Accordingly, assembly workability of the holding member 20 is further improved.

According to the disclosure, the disclosure is able to be applied in, for example, a blower mounted on a household electric appliance such as a refrigerator.

Features of the above-described preferred embodiments and the modifications thereof may be combined appropriately as long as no conflict arises.

While preferred embodiments of the present disclosure have been described above, it is to be understood that variations and modifications will be apparent to those skilled in the art without departing from the scope and spirit of the present disclosure. The scope of the present disclosure, therefore, is to be determined solely by the following claims.

## Claims

1. A holding member (20) that holds a motor (30), comprising:
a base (21), having the motor (30) disposed on an upper surface thereof with a center axis of rotation of the motor (30) arranged in an up-down direction; and
a plurality of attachment parts (23), disposed radially outside the base (21),
**characterized in that**
each of the plurality of attachment parts (23) comprises:
a frame (231), surrounding an insertion hole (23a) that penetrates in an axial direction and connected to the base (21);
a pair of grippers (232), disposed inside the insertion hole (23a) and extending radially outward from the base (21);
a first projecting part (233), disposed between the pair of grippers (232) and projecting radially outward from the base (21); and
a second projecting part (234), projecting from the frame (231) into the insertion hole (23a).

2. The holding member (20) according to claim 1, wherein
the first projecting part (233) and the second projecting part (234) face each other in the radial direction.

3. The holding member (20) according to claim 1 or 2, wherein
an upper surface of the first projecting part (233) or an upper surface of the second projecting part (234) is located on the axially upper side of an upper surface of the pair of grippers (232).

4. The holding member (20) according to any one of claims 1 to 3, wherein
a plurality of protrusions (232a) are defined on facing surfaces of the pair of grippers (232) that face each other.

5. The holding member (20) according to claim 4, wherein
the plurality of protrusions (232a) are disposed in a circular shape as viewed in the axial direction.

6. The holding member (20) according to claim 1 or 2, wherein
each of the pair of grippers (232) comprises a gripping convex part (232b) projecting in a direction away from the other of the pair of grippers (232);
the frame (231) comprises a frame convex part (231a) projecting into the insertion hole (23a);
the gripping convex part (232b) and the frame convex part (231a) face each other in a circumferential direction.

7. The holding member (20) according to claim 1 or 2, wherein
each of the pair of grippers (232) comprises an inclined part (232c) disposed at an axially lower end thereof and inclined in a direction approaching the other of the pair of grippers (232) toward the axially upper side.

8. The holding member (20) according to claim 1 or 2, wherein
the first projecting part (233) and the second projecting part (234) have a through hole (233a, 234a) penetrating in the axial direction.

9. The holding member (20) according to claim 1 or 2, wherein
each of the plurality of attachment parts (23) further comprises:
a third projecting part (235), disposed adjacent to the second projecting part (234) in a circumferential direction and projecting from the frame (231) into the insertion hole (23a), wherein
an upper surface of the third projecting part (235) is at a same axial height as an upper surface of the first projecting part (233) or an upper surface of the second projecting part (234).

10. The holding member (20) according to claim 1 or 2, wherein
the base (21) comprises:
a plate (210), having a plate shape, having the motor (30) disposed on an upper surface thereof; and
an arm (211), extending radially outward from the plate (210) and disposed in plural in a circumferential direction, the plurality of attachment parts (23) being disposed radially outside the arm (211);
wherein the holding member (20) further comprises:
a connection part (24), connecting outer peripheral parts of adjacent ones of the arms (211) in the circumferential direction; and
a lead wire holder (25), bridging the connection part (24) and the plate (210), wherein
the lead wire holder (25) comprises a hook (251) projecting in the circumferential direction.
